# EUROPÄISCHE PATENTSCHRIFT

(11) **EP 0 638 978 B1**
(45) Veröffentlichungstag und Bekanntmachung des Hinweises auf die Patenterteilung: **11.12.1996**
(21) Anmeldenummer: 94111973.7
(22) Anmeldetag: 01.08.1994
(51) Int. Cl.: H02H 9/00, H04B 15/02

(54) **Stromversorgungsanlage**
Power supply device
Dispositif d'alimentation

(30) Priorität: 09.08.1993 DE 4326734
(43) Veröffentlichungstag der Anmeldung: 15.02.1995
(73) Patentinhaber: SIEMENS AKTIENGESELLSCHAFT, 80333 München (DE)
(72) Erfinder: Ibrahim, Sobhy, Dipl.-Ing., D-81379 München (DE)

(56) Entgegenhaltungen:
- US-A- 4 725 739
- US-A- 5 165 055

## Beschreibung

Die Erfindung bezieht sich auf eine Stromversorgungsanlage gemäß dem Oberbegriff des Patentanspruchs 1.

An derartige komplexe Waffensysteme mit hohem Elektronikaufwand werden sehr hohe Anforderungen hinsichtlich der elektromagnetischen Verträglichkeit(EMV) gestellt, denen nur sehr schwierig und gewöhnlich unter sehr hohem Aufwand genügt werden kann. Dabei sind strenge Bestimmungen bezüglich der Stromstärke niederfrequenter geleiteter Aussendungen geringer Amplitude sowie geleiteter Aussendungen an den Ausgangsanschlüssen von Geräten jeweils für Gleich- und Wechselstromlast, bezüglich der Störempfindlichkeit gegenüber geleiteter Energie und gegenüber Nadelimpulsen auf Stromversorgungsleitungen, bezüglich abgestrahlter Aussendungen für magnetisches Feld und für Breitband und Schmalband und darüber hinaus bezüglich der Störempfindlichkeit gegenüber abgestrahlter Energie, sowohl was das magnetische Induktionsfeld als auch das elektrische Feld angeht, einzuhalten. Des weiteren ist ein vorgeschriebenes Maß für die Störfestigkeit gegen Nanosekundenimpulse und für die Einfügungsdämpfung zwischen den einzelnen Bereichen und Teilsystemen einzuhalten. Außerdem sind alle Fernmeldekomponenten für den beweglichen Einsatz gegen den nuklearen elektromagnetischen Impuls (NEMP) zu schützen, wobei der Schutzgrad an die Forderung für das waffensystemtypische Gerät auszurichten ist. Fernmeldekabinen sind durch geeignete Filter für die Kabel/Antennen usw. zu schützen.

Der Erfindung liegt die Aufgabe zugrunde, Filterungsmaßnahmen in der Stromversorgungsanlage für die betreffenden Teilsysteme derart vorzusehen, daß zum einen eine Absenkung der ausgehenden elektromagnetischen Störungen, sowohl leitungs- als auch strahlungsgebunden, auf die vorgeschriebenen Grenzwerte und zum anderen auch ein wirksamer Schutz gegen Einzelimpulse aus dem Starkstromnetz (Transienten-Überspannungen) erreicht wird, so daß im Sinne der elektromagnetischen Verträglichkeit alle Geräte und Teilsysteme gleichzeitig störungsfrei arbeiten können, wobei die im Rahmen der Stromversorgung zu schaffenden Filterungsmaßnahmen nicht als aktiver Teil gegen kompromittierende Aussendungen bzw. zur Erreichung von Abhörsicherheit zu verstehen sind.

Diese Aufgabe wird bei einer Stromversorgungsanlage gemäß dem Oberbegriff des Patentanspruchs 1 durch die im kennzeichnenden Teil des Anspruchs 1 angegebenen Merkmale gelöst.

Zweckmäßige Weiterbildungen der Erfindung sind in den Unteransprüchen angegeben.

Die Erfindung wird im folgenden anhand von drei Figuren erläutert.

Es zeigen
- Fig. 1: das Prinzipschaltbild einer Stromversorgungsanlage nach der Erfindung,
- Fig. 2: Schaltungen für vorteilhafte Drehstrom-Ausführungsbeispiele der drei Filterstufen A, B und C,
- Fig. 3: in Blockschaltbildform das Prinzipschema einer gemäß der Erfindung durchgeführten, geschirmten und gefilterten Stromversorgung für eine Kabine einer Richtfunk-Anlage, die ein Teilsystem eines komplexen Waffensystems bildet.

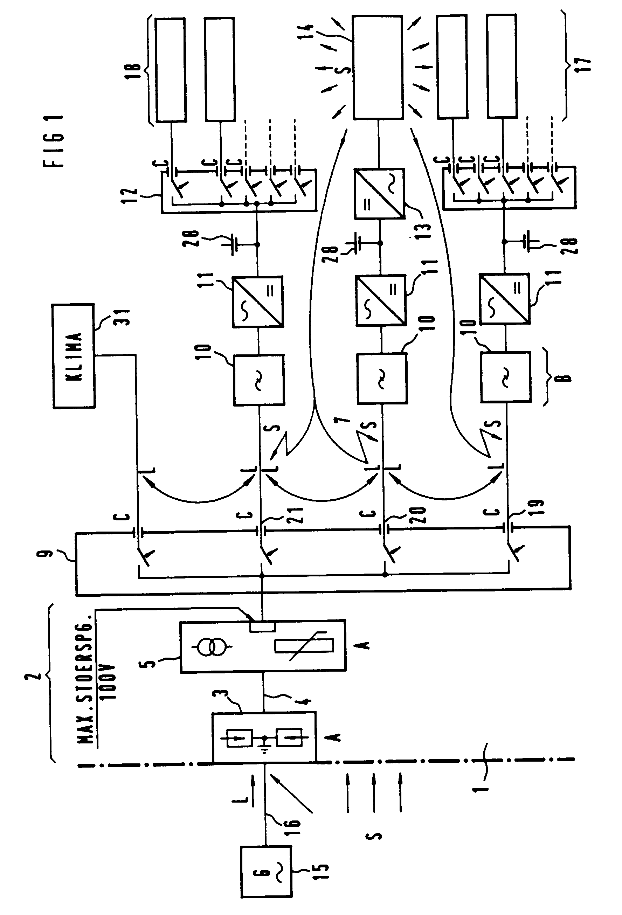

In Figur 1 ist das Prinzipschaltbild eines Ausführungsbeispiels einer erfindungsgemäßen Stromversorgungsanlage eines beweglichen, in einer Kabine 1 eingebauten Teilsystems (z.B. Richtfunk-Anlage) des Waffensystems dargestellt. Gespeist wird diese Stromversorgungsanlage von einem mitgeführten Wechselstrom-Stromerzeugungsaggregat 15 über eine Leitung 16. Die Netzanschlußeinheit 2 im Teilsystem besteht aus einem Netzanschlußkasten 3, einem NEMP-Kabel 4 sowie einem Zwischentransformator 5.Zur getrennten Versorgung dreier Teilbereiche, nämlich eines Fernmelde-Bereichs, eines Routenlogik-Funkschnittstelleneinheits-Bereichs und eines Funkbereichs sowie einer Klimaanlage 31 folgt danach eine Wechselstrom-Schalt- und Verteilereinheit 9. Die Stromversorgung in den drei genannten Teilbereichen ist in drei entkoppelte EMV-Bereiche, nämlich einen Fernmelde-Bereich 6, einen Routenlogik-Funkschnittstellen-Einheits-Bereich 7 und einen Funk-Bereich 8 aufgeteilt. Die Bereichstrennung wird durch Verwendung von Schirmgehäusen, Kabelschirmen, Filtern und ähnlichen Maßnahmen im Konstruktionsbereich realisiert. Der größte Teil der Geräte in dem im Ausführungsbeispiel behandelten Teilsystem arbeitet mit Gleichstrom von ca. 24 Volt. Es werden drei Filterstufen, nämlich als erste Stufe eine Grobschutz-Filterstufe A, als zweite Stufe eine Bereichsentkopplungs-Stufe B und als dritte Stufe eine Feinschutzstufe C verwendet.

Die Grobschutz-Filterstufe A ist in der Netzanschlußeinheit 2 und dort insbesondere im Netzanschlußkasten 3 und im Zwischentransformator 5 plaziert. Die Grobschutz-Filterstufe A dient zum Abbauen von Stoßströmen bei Stoßspannungswellen, wie sie typischerweise z.B. bei Blitzen auftreten. Außerdem sollen mit dieser Stufe EMP und NEMP-Feldimpulse rasch abgebaut werden. Bei der Ausgestaltung der Grobschutz-Filterstufe A ist zu berücksichtigen, daß eine maximale Störspannung von z.B.100 V am Ausgang des Zwischentransformators 5 nicht überschritten werden darf. Der Abbau bzw. das Vernichten von solchen Störungen (Impulsen) wird mit folgenden Bauelementen in der Netzanschlußeinheit 2 realisiert: Hochstromfunkenstrecke, Löschfunkenstrecke, Spike-Drosseln, Einschaltstrombegrenzung, Varistoren und Durchführungsfilter.

In den Teilbereichen 6, 7 und 8 sind im Wechselstromzuführungsweg jeweils noch Netzleitungsfilter 10 angeordnet, die im Teilsystem neben ihrer hauptsächlichen Aufgabe, nämlich der Absenkung der ausgehenden elektromagnetischen Störungen und dem wirksamen Schutz gegen Einzelimpulse aus dem Starkstromnetz, noch folgende Eigenschaften haben: Sie entkoppeln die drei EMV-Teilbereiche 6, 7 und 8 so weit, daß keine Störungen aus den jeweils anderen Bereichen eingekoppelt werden. Bei Ausfall einer dieser drei Bereiche 6, 7 und 8 arbeiten jeweils die beiden anderen Bereiche unabhängig voneinander oder vom gestörten Bereich weiter. Die Netzleitungsfilter 10, die also die Bereichsentkopplungs-Filterstufe B darstellen, dienen auch der Abflachung von Flanken von Überspannungen, die durch hohe Spannungssteilheiten besonders bei Blitzeinschlag auftreten. Außerdem erreicht man mit ihnen eine Störspannungsbegrenzung auf einen maximalen Spannungswert bei einer bestimmten Nennspannung, woraus sich eine maximale Ausgangsscheitelspannung am Filterausgang ergibt.

Nach dem Netzleitungsfilter 10 folgen in jedem der drei Teilbereiche 6, 7 und 8 Gleichrichter 11, die dann eine Gleichspannung von etwa 24 V abgeben. Im Fernmelde-Bereich 6 folgt dann eine Gleichstrom-Schalt- und Verteilereinheit 12, welche die Versorgungsgleichspannung an verschiedene Fernmelde-Baugruppen 17 verteilt abgibt. Im Funk-Bereich 8 folgen dem Netzleitungsfilter 10 ebenfalls ein Gleichrichter 11 und eine Gleichstrom-Schalt- und Verteilereinheit 12, die dann verschiedene Funk-Baugruppen 18 gleichstrommäßig getrennt versorgt. Im Routenlogik-Funkschnittstelleneinheits-Bereich 7 folgt dem Netzleitungsfilter 10 zwar ebenfalls ein Gleichrichter 11. Da die zu versorgenden Geräte 14 der Routenlogik-Funkschnittstelleneinheit jedoch mit Wechselstrom gespeist werden, ist dem Gleichrichter 11 ein Wechselrichter 13 nachgeschaltet. Die Gerätefilter für die Feinschutz-Filterstufen C sind grundsätzlich in die Wechselstrom-Schalt- und Verteilereinheit 9 sowie in die Gleichstrom-Schalt- und Verteilereinheiten 12 an den Steckdosenabgängen eingebaut. Sie haben die Aufgabe, die Ableitung von Störungen bzw. Störspannungen und -strömen (sowohl Wechsel- als auch Gleichspannungen und -ströme), die aus den jeweils zu versorgenden Geräten kommen, durchzuführen. Alle 24 V-Gleichstrom-Geräte auf der Stromversorgungs- und Verteilungsebene, also z.B. die Gleichrichter 11, Pufferbatterien 28 und die Gleichstrom-Schalt- und Verteilereinheiten 12 des Teilsystems sind gegen MS(Masterswitch)-Impulse und gegen Störaussendungen von MS-Impulsen durch diese Gerätefilter in den Feinschutz-Filterstufen C geschützt (also auch transientenschutzgeeignet).

In Fig. 1 sind strahlungsgebundene Störungen, die in das Teilsystem einwirken, mit S und leitungsgebundene Störungen mit L bezeichnet.

Der am Ausgang 19 der Wechselstrom-Schalt- und Verteilereinheit 9 beginnende Fernmelde-Bereich 6 besitzt in einem Stromversorgungsgerät für die Feinschutz-Filterstufen C eine Vielzahl von Gerätefiltern, die nach dem Ausgang der Wechselstrom-Schalt- und Verteilereinheit 9 bzw. am Ausgang der Gleichstrom-Schalt- und Verteilereinheit 12 eingebaut sind, sowie ein Netzleitungsfilter 10, das als Bereichsentkopplungs-Filterstufe B dient. Diese Art hintereinander in der Stromversorgungskette geschalteter Filter reduziert die auftretenden, auch eigene Störungen (Störspannung/Störströme) auf die zulässigen, vorgegebenen Systemgrenzwerte.

Auch der Routenlogik-Funkschnittstelleneinheits-Bereich 7, der nach dem Ausgang 20 der Wechselstrom-Schalt- und Verteilereinheit 9 beginnt, besitzt in einem Stromversorgungsgerät als Feinschutz-Filterstufen C eine Vielzahl von Gerätefiltern, die am Eingang bzw. Ausgang des Gleichrichters 10, Wechelrichters 11 und dem Gerät 14 für die Routenlogik-Funkschnittstelleneinheit eingebaut sind, sowie ein der Bereichs-Entkopplung B dienendes Netzleitungsfilter 10. Auch die Umsetzung im Gleichrichter 11 und die Umkehr im Wechselrichter 13 stellt sicher, daß keine gegebenefalls vorhandenen klaren Daten durch kompromittierende Aussendungen zurück ins Netz eingeschleust werden.

Der Funk-Bereich 8, der nach dem Ausgang 21 der Wechselstrom-Schalt- und Verteilereinheit 9 beginnt, weist in einem Stromversorgungsgerät ebenfalls eine Vielzahl von Gerätefiltern, die der Feinschutz-Filterstufe C angehören, wobei diese Gerätefilter am Eingang des den Gleichrichter 11 enthaltenden Stromversorgungsgeräts und am Ausgang der Gleichstrom-Schalt- und Verteilereinheit 12 eingebaut sind, sowie ein Netzleitungsfilter 10 als Bereichsentkopplungs-Filterstufe B auf.

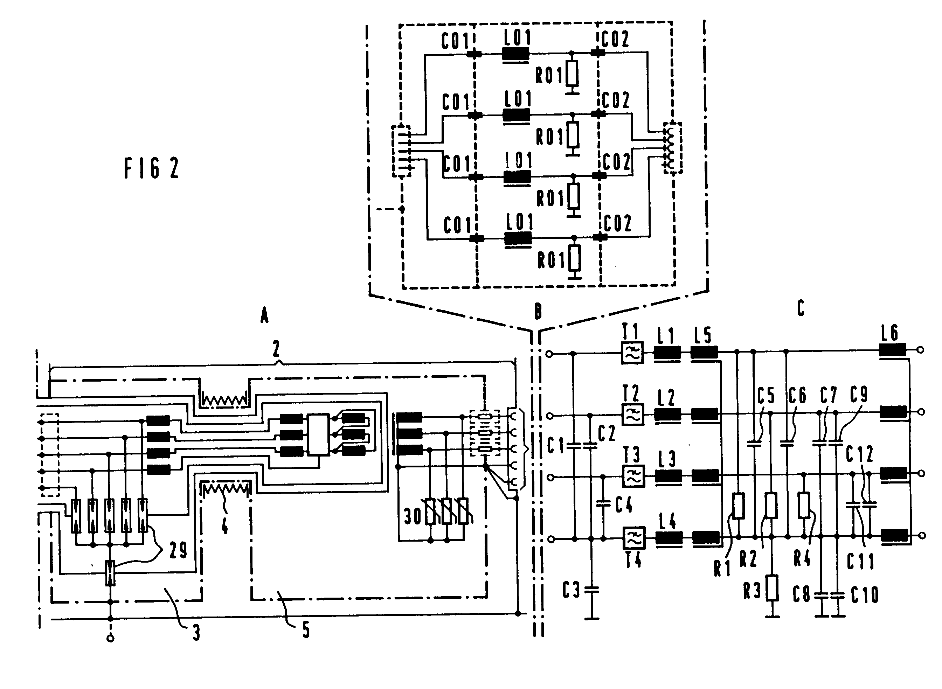

Fig. 2 zeigt links eine Netzanschlußeinheit 2 mit einem Netzanschlußkasten 3, einem NEMP-Kabel 4 und einem Zwischentransformator 5, wobei als Grobschutz-Filterstufe A z.B. unter anderem im Netzanschlußkasten 3 Hochspannungs-Löschfunkenstrecken 29 und im Zwischentransformator 5 Entladungsstrecken von Varistoren 30 vorgesehen sind. In der Mitte Zeigt Fig. 2 ein Beispiel für ein Netzleitungsfilter 10, das als Bereichsentkopplungs-Filterstufe B dient. Dieses Netzleitungsfilter besteht aus Längsinduktivitäten L01, Querwiderständen R01 und Querkapazitäten C01, C02 in Form von Durchführungskondensatoren. Rechts in Fig. 2 ist ein Schaltungsbeispiel eines Gerätefilters dargestellt, das als Feinschutz-Filterstufe C dient. Es besteht aus Tiefpaßgliedern T1-T4, Längsinduktivitäten L1-L6, Querkapazitäten C1-C12 und Querwiderständen R1-R4.

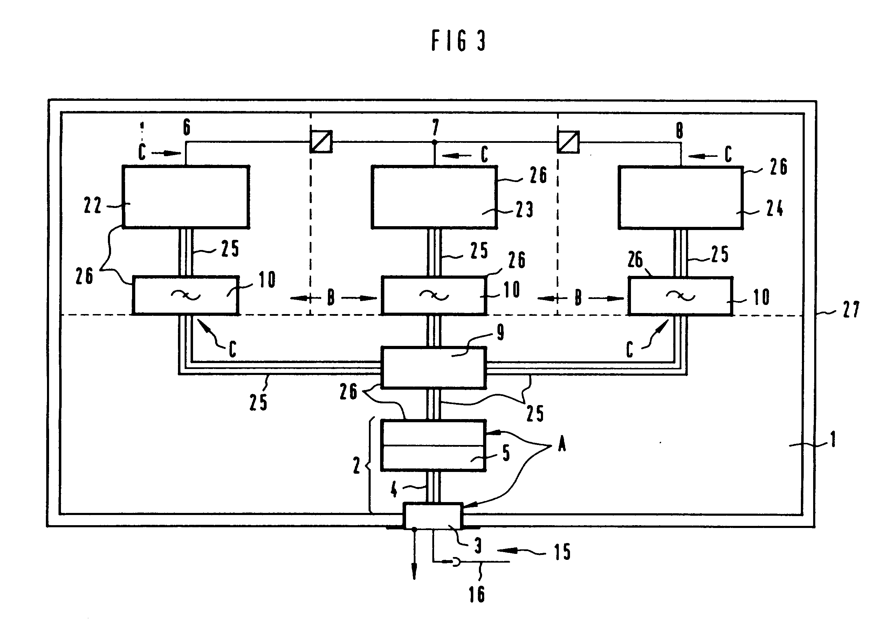

Fig. 3 zeigt in einer schematischen Blockansicht die Bereichstrennung gemäß einer Stromversorgungsanlage nach der Erfindung. Alle vorhandenen Geräte des betroffenen Teilsystems, z.B. einer Richtfunkanlage, sind dabei für die Stromversorgung in drei entkoppelte EMV-Bereiche aufgeteilt, nämlich in den Fernmelde-Bereich 6, den Routenlogik-Funkschnittstelleneinheits-Bereich 7 und den Funk-Bereich 8. Für jeden der drei Bereiche 6, 7 und 8 ist ein eigenes Netzleitungsfilter 10 zur Bereichsentkopplung und ein Stromversorgungsgerät 22, 23 bzw. 24 mit Gleichrichter und Batterieeinheit vorgesehen. In den Stromversorgungsgeräten 22 und 24 des Fernmelde-Bereichs 6 bzw. des Funk-Bereichs 8 ist jeweils noch eine Gleichstrom-Schalt- und Verteilereinheit enthalten, wogegen im Stromversorgungsgerät 23 des Routenlogik-Funkschnittstelleneinheits-Bereichs 7 ein Wechselrichter vorgesehen ist. Gespeist werden die drei Bereiche von einer mit der Grobschutz-Stufe A versehenen Netzanschlußeinheit 2, die primär von einem externen Stromerzeugungsaggregat 15 über eine Leitung 16 versorgt wird und einen Netzanschlußkasten 3, ein NEMP-Kabel 4 und einen Zwischentransformator 5 enthält, über eine Wechselstrom-Schalt- und Verteilereinheit 9. Die Bereichstrennung wird durch Verwendung von hochfreguenzdichten Stromversorgungskomponenten, zweifach geschirmten Kabelschirmen, Filtern und ähnlichen Maßnahmen im Konstruktionsbereich für das gesamte, sich in einer Kabine 1 befindende Teilsystem realisiert. Die Stromversorgungsleitungen sind vom Netzanschlußkasten 3 über den Zwischentransformator 5, die Wechselstrom-Schalt- und Verteilereinheit 9 und die Netzleitungsfilter 10 bis zu den unterschiedlichen Stromversorgungsgeräten 22, 23 und 24 in den Bereichen 6, 7 und 8 in Form doppelter Schirmkabel 25 und in getrennten Kabelschächten/Kanälen geführt. Die Geräte-Schirmgehäuse sind mit 26 und die Schirmgerhäuse der Kabine mit 27 bezeichnet. Die Geräte-Schirmgehäuse 26 weisen im Ausführungsbeispiel eine Mindest-Dämpfung von 60 dB im Frequenzbereich von 10 kHz bis 10 GHz und das Kabinen-Schirmgehäuse 27 ebenfalls eine Mindestdämnpfung von 60 dB im Frequenzbereich zwischen 10 kHz und 10 GHz auf, woraus sich eine Gesamtdämpfung gegen strahlungsgebundene Störungen von mindestsens 120 dB im oben genannten Frequenzbereich ergibt. Die Positionen der Filterstufen A, B, C sind anhand mit Pfeil versehener Linien angedeutet.

## Patentansprüche

1. Von einem getrennten Stromerzeugungsaggregat über eine Leitung an einem Wechselspannungs-Netzanschlußkasten gespeiste Stromversorgungsanlage für Kommunikationseinrichtungen eines Teilsystems innerhalb eines aus mehreren funktionalen und untereinander kommunizierenden, beweglichen Teilsystemen bestehenden Waffensystems, insbesondere zur Bekämpfung von Flugzielen,
**dadurch gekennzeichnet,**
daß in bestimmten der Teilsysteme, z.B. in den Kabinen (1) von Richtfunkanlagen und Führungswagen, die Stromversorgung nach einer Netzanschlußeinheit (2), welche der Reihe nach den Netzanschlußkasten (3), ein NEMP(Nuclear Electromagnetic Pulse)-Kabel (4) und einen Zwischentransformator (5) enthält, mittels einer Wechselstrom-Schalt- und Verteilereinheit (9) in drei entkoppelte EMV-(elektromagnetische Verträglichkeit)-Bereiche aufgeteilt ist, nämlich in einen Fernmelde-Bereich (6), einen Routenlogik-Funkschnittstelleneinheit-Bereich (7) und einen Funk-Bereich (8), daß die Bereichstrennung in konstruktiver Hinsicht durch Verwendung von Schirmgehäusen, Kabelschirmen, Filtern und ähnliche Maßnahmen realisiert ist, daß jedes dieser Teilsystseme mit drei Stufen (A, B, C) von Filtern versehen ist, daß in der ersten Stufe (A) als Grobschutz zum Abbauen von hohen Stoßströmen (EMP) (Electromagnetic-Pulse) und NEMP-Feldimpulsen in der Netzanschlußeinheit (2) eine Hochstromfunkenstrecke, eine Löschfunkenstrecke, Spike-Drosseln, eine Einschaltstrombegrenzung, Varistoren und/oder Durchführungsfilter vorgesehen sind, daß in der zweiten Stufe (B) als Entkopplungsglieder nach der Wechselstrom-Schalt- und Verteilereinheit (9) für jeden der drei genannten EMV-Bereiche aus Quer- bzw. Durchführungskondensatoren, Längsinduktivitäten und/oder Querwiderständen bestehende Netzleitungsfilter (10) vorgesehen sind, welche die drei EMV-Bereiche so voneinander entkoppeln, daß keinerlei Störungen jeweils aus den anderen EMV-Bereichen eingekoppelt werden, und welche zudem eine Ableitung von eindringenden Überspannungen, z.B. bei Blitzschlag, sowie eine Begrenzung von äußeren Störspannungen ausführen, daß in der dritten Stufe (C) als Feinschutz zur Ableitung von aus den zu versorgenden Geräten kommenden Störungen bzw. Störspannungen und Störströmen vorzugsweise an den Steckdosen-Abgängen in der Wechselstrom-Schalt- und Verteilereinheit (9) und in nach Gleichrichtern (11) angeordneten Gleichstrom-Schalt- und Verteilereinheiten (12) Gerätefilter vorgesehen sind.

2. Stromversorgungsanlage nach Anspruch 1,
**dadurch gekennzeichnet,**
daß im EMV-Bereich der Routenlogik-Funkschnittstelleneinheit nach dem Gleichrichter (11) keine Maßnahme zum Feinschutz, sondern ein Wechselrichter (13) vorgesehen ist, der das Gerät (14) der Routenlogik- Funkschnittstelleneinheit versorgt.

3. Stromversorgungsanlage nach einem der vorhergehenden Ansprüche,
**dadurch gekennzeichnet,**
daß die zum Feinschutz (C) vorgesehenen Gerätefilter Tiefpaßglieder (T1-T4), Längsinduktivitäten (L1-L6) sowie Querkapazitäten (C1-C12) und Querwiderstände (R1-R4) aufweisen.

## Claims

1. Power supply system, which is fed from a separate power generation unit via a cable to an AC power supply terminal box for communication devices in a subsystem within a weapon system which comprises a plurality of functional, moving subsystems which communicate with one another, in particular for attacking airborne targets, characterized in that, in specific subsystems, for example in the cabins (1) of radio link systems and command vehicles, the power supply is split, after a power supply connection unit (2) which, in series, contains the power supply terminal box (3), an NEMP (Nuclear Electromagnetic Pulse) cable (4) and an intermediate transformer (5), by means of an AC switching and distribution unit (9) into three decoupled EMC (Electromagnetic Compatibility) areas, namely into a telecommunications area (6), a route-logic radio interface unit area (7) and a radio area (8), in that the separation of the areas is implemented from the structural point of view by using screened housings, cable screens, filters and similar measures, in that each of these subsystems is provided with three stages (A, B, C) of filters, in that a heavy-current spark gap, an extinguishing spark gap, spike suppressors, an inrush current limiter, varistors and/or bushing filters are provided in the first stage (A) as initial protection to reduce strong current pulses (EMP) (Electromagnetic Pulses) and NEMP field pulses in the power supply connection unit (2), in that power cable filters (10) are provided in the second stage (B) as decoupling elements downstream of the AC switching and distribution unit (9) for each of the three said EMC areas, which power supply cable filters (10) comprise parallel capacitors and bushing capacitors, series inductors and/or parallel resistors and decouple the three EMC areas from one another such that no interference can respectively be received from the other EMC areas, and which additionally dissipate incoming overvoltages, for example in the event of a lightning strike, and limit external interference voltages, in that equipment filters are provided in the third stage (C), as final protection to dissipate interference and/or interference voltages and interference currents coming from the equipment to be supplied, preferably at the socket outlets in the AC switching and distribution unit (9) and in DC switching and distribution units (12) which are arranged after rectifiers (11).

2. Power supply system according to Claim 1, characterized in that no measures for final protection are provided in the EMC area of the route-logic radio interface unit after the rectifier (11), but an invertor (13) is provided, which supplies the equipment (14) of the route-logic radio interface unit.

3. Power supply system according to one of the preceding claims, characterized in that the equipment filters which are provided for final protection (C) have low-pass elements (T1-T4), series inductors (L1-L6) as well as parallel capacitors (C1-C12) and parallel resistors (R1-R4).

## Revendications

1. Installation d'alimentation en courant, alimentée par une unité séparée de production du courant par l'intermédiaire d'une ligne raccordée à un boîtier de raccordement au réseau à courant alternatif, pour des dispositifs de communication d'un système partiel à l'intérieur d'un système d'arme constitué de plusieurs systèmes partiels fonctionnels mobiles, communiquant entre eux, notamment pour la lutte contre des cibles volantes,
caractérisée en ce
que dans certains des systèmes partiels, par exemple dans les cabines (1) d'installations de transmission hertzienne et de chariots de guidage, l'alimentation en courant est subdivisée, en aval d'une unité (2) de raccordement au réseau, qui contient en série le boîtier (3) de raccordement au réseau, un câble NEMP (Nuclear Electromagnetic Pulse) (4) et un transformateur intermédiaire (5), au moyen d'une unité de commutation et de distribution à courant alternatif (9), en trois parties CEM (à compatibilité électromagnétique) découplées, à savoir une partie de télécommunications (6), une partie (7) formant unité d'interface hertzienne à logique d'acheminement et une partie hertzienne (8), que la séparation des parties est réalisée, du point de vue construction, au moyen de l'utilisation de boîtiers blindés, de blindages de câbles, de filtres et de dispositions similaires, que chacun de ces systèmes est pourvu de trois étages (A,B,C) de filtres, que dans le premier étage (A) il est prévu, comme système de protection grossier pour supprimer des impulsions de courant intenses EMP (Electromagnetic-Pulse) et des impulsions de champ NEMP dans l'unité (2) de raccordement au réseau, un éclateur à courant fort, un éclateur d'extinction, des inductances de suppression de pointes, un limiteur de courant de branchement, des varistances et/ou des filtres de traversée, que dans le second étage (B) il est prévu, comme éléments de découplage en aval de l'unité (9) de commutation et de distribution de courant alternatif, pour chacune desdites trois parties CEM, des filtres de ligne du réseau (10), qui sont constitués par des condensateurs transversaux ou des condensateurs de traversée, des inductances longitudinales et/ou des résistances transversales et qui découplent les unes des autres les trois parties CEM de telle sorte qu'aucune perturbation n'est injectée respectivement à partir des autres parties CEM, et qui exécutent en outre une dérivation de surtensions arrivantes, par exemple dans le cas d'une décharge de foudre, ainsi qu'une limitation de tensions parasites extérieures, que dans le troisième étage (C) il est prévu comme système de protection affiné, pour la dérivation de parasitages ou de tensions parasites et de courants parasites arrivant des appareils devant être alimentés, des filtres d'appareils, installés de préférence sur les départs de prises dans l'unité (9) de commutation et de distribution de courant alternatif et dans des unités (12) de commutation et de distribution de courant continu, disposées en aval de redresseurs (11).

2. Installation d'alimentation en courant selon la revendication 1, caractérisée en ce que dans la partie CEM de l'unité formant interface de transmission hertzienne à logique de cheminement, en aval du redresseur (11) il n'est prévu aucune disposition de protection affinée, mais il est prévu un onduleur (13), qui alimente l'appareil (14) de l'unité formant interface de transmission hertzienne à logique d'acheminement.

3. Installation d'alimentation en courant selon l'une des revendications précédentes, caractérisée en ce que les filtres d'appareils, qui sont prévus pour réaliser la protection affinée (C), possèdent des filtres passe-bas (T1-T4), des inductances longitudinales (L1-L6) ainsi que des capacités transversales (C1-C12) et des résistances transversales (R1-R4).
